# EUROPEAN PATENT APPLICATION

(11) **EP 4 697 061 A1**
(43) Date of publication of application: **18.02.2026**
(21) Application number: 25194680.2
(22) Date of filing: 07.08.2025
(51) Int. Cl.: G01S 7/41, G01S 13/56

(54) **DATA PROCESSING METHOD AND DATA PROCESSING SYSTEM**

(30) Priority: 12.08.2024 CN 202411100879
(71) Applicant: Alps Alpine Co., Ltd., Tokyo 145-8501 (JP)
(72) Inventor: Cao, Xiaojian, Shanghai, 200122 (CN)
(74) Representative: Maiwald GmbH

(57) **Abstract**

The present invention provides a data processing method and a data processing system (1), through which detection precision of an in-vehicle living being can be improved. The data processing method processes data collected by a millimeter-wave radar (2) and includes: a step of collecting in-vehicle measured data; and a step of eliminating noise in the in-vehicle measured data based on a noise map. The noise map is generated based on in-vehicle environmental data collected when it is determined that no living being exists in a vehicle.

## Description

### BACKGROUND OF THE INVENTION

### 1. Field of the Invention

The present invention relates to a data processing method and a data processing system.

### 2. Description of the Related Art

In the field of vehicle safety, a living being detection technology for an in-vehicle child or pet is an important research direction. In order to detect an in-vehicle living being, an occupant detection technology based on a millimeter-wave radar is usually used. The millimeter-wave radar operates by emitting discontinuous radar signals and subsequently analyzing returned radar signals to discern an existence, a distance, a speed, etc. of a target. Specifically, with the occupant detection technology based on a millimeter-wave radar, after a driver leaves a vehicle, the millimeter-wave radar emits millimeter-wave radar signals within a short time (for example, 10 seconds), and then vital signs in the collected radar signals are analyzed to identify any in-vehicle living being (for example, a child, a sleeping adult, or a pet). Once the in-vehicle living being is identified, an alarm is triggered to guarantee safety of the in-vehicle occupant. In addition, with the existing occupant detection technology based on a millimeter-wave radar, before the collected radar signals are analyzed and identified, data in the radar signals need to be processed by reducing an influence of noise in an in-vehicle environment.

Common methods for processing data for noise reduction include methods for processing real-time data, such as signal strength enhancement, resolution improvement, circuit filtering, and software filtering. However, since the collected radar signals include both signals from the target (for example, a living being) and signals from the noise, the existing methods for processing data for noise reduction have various problems as below.

First of all, when the noise is reduced based on noise separation parameters by the existing data processing method, the collected radar signals include both signals from the target and signals from the noise, which will cause low reliability of the noise separation parameters. In addition, in order to acquire highly reliable noise separation parameters, a very complicated computation method is required, which will lead to an increase in maintenance costs and a decrease in work efficiency. Secondly, when noise reduction is performed in real time by the existing data processing method, it is impossible to simultaneously balance a precision and a working time of an algorithm since the precision is directly proportional to the working time. In order to achieve a sufficiently high level of the precision of the algorithm while performing the existing data processing method, it is necessary to reduce a performance and extend the working time, which will lead to delayed alarms and extended rescue time. Finally, every time the in-vehicle living being is detected by the existing data processing method, historical data from the previous detection will be discarded and new data will be detected. As a result, sensors and other components become unable to make full use of idle resources, and the performance and work efficiency of the data processing method are further limited.

Hence, when used to detect the in-vehicle living being, the existing data processing method is particularly susceptible to influence from the noise in the in-vehicle environment, which increases false detection, decreases detection precision, and requires massive data processing.

In addition, every time the in-vehicle living being is detected by another existing data processing method, the noise in the collected radar signals is eliminated by using preset data indicating the ex-factory in-vehicle environment. However, if, for example, articles placed in the vehicle are increased, the in-vehicle environment will change along with a use of the vehicle. Consequently, by using the preset data indicating the ex-factory in-vehicle environment, the noise is impossible to eliminate accurately, and thus detection precision will be reduced.

### SUMMARY OF THE INVENTION

In view of the above technical problems, the present invention provides a data processing method and a data processing system, through which detection precision of in-vehicle living being can be improved.

A data processing method according to the present invention processes data collected by a millimeter-wave radar and includes: a step of collecting in-vehicle measured data; and a step of eliminating noise in the in-vehicle measured data based on a noise map generated based on in-vehicle environmental data collected when it is determined that no living being exists in a vehicle.

Thus, through the data processing method of the present invention, the noise map is generated by collecting the in-vehicle environmental data when it is determined that no living being exists in the vehicle, and the noise in the in-vehicle measured data is eliminated based on the noise map. In this way, when the in-vehicle measured data after noise elimination are analyzed to detect the in-vehicle living being, the detection precision of the in-vehicle living being can be improved.

In addition, through the data processing method of the present invention, the in-vehicle measured data are processed by generating the noise map with the in-vehicle environmental data collected when it is determined that no living being exists in the vehicle. Thus, compared with the method for eliminating noise by constantly using ex-factory preset in-vehicle environmental data, the noise can be accurately eliminated by using the method of the present invention, and the detection precision of the in-vehicle living being can be improved.

According to the data processing method of the present invention, the in-vehicle environmental data include at least one of time domain data, frequency domain data, and spatial data.

Thus, through the data processing method of the present invention, the in-vehicle environmental data collected when it is determined that no living being exists in the vehicle are converted into at least one of three dimensions of data of the time domain data, the frequency domain data, and the spatial data. Therefore, information such as time, type, source, and position of the noise is determined respectively in three dimensions. Then, the noise can be further accurately eliminated, and the detection precision of the in-vehicle living being can be improved. In addition, a computation amount during the detection of the in-vehicle living being can be reduced, and the work efficiency can be improved.

According to the data processing method of the present invention, in the step of eliminating noise in the in-vehicle measured data, based on the noise map, noise information in the in-vehicle measured data is identified according to the time domain data, the frequency domain data, and the spatial data, and the noise is eliminated by using a noise reduction method corresponding to the noise information.

Thus, through the data processing method of the present invention, noise information such as time, type, source, and position of the noise is determined respectively in three dimensions of the time domain data, the frequency domain data, and the spatial data. Then, corresponding noise reduction methods can be appropriately used according to different noise conditions indicated by the noise information, the noise can be further accurately eliminated, and the detection precision of the in-vehicle living being can be improved. In addition, the work efficiency can be further improved.

According to the data processing method of the present invention, in the step of eliminating noise in the in-vehicle measured data, according to information indicating a time range of occurrence of the noise in the time domain data, data within the time range in the in-vehicle measured data are eliminated.

According to the data processing method of the present invention, in the step of eliminating noise in the in-vehicle measured data, according to information indicating a frequency range of the noise in the frequency domain data, data within the frequency range in the in-vehicle measured data are eliminated.

According to the data processing method of the present invention, in the step of eliminating noise in the in-vehicle measured data, according to information indicating a position range of occurrence of the noise in the spatial data, data within the position range in the in-vehicle measured data are eliminated.

Thus, through the data processing method of the present invention, the noise is eliminated respectively in three dimensions of the time domain data, the frequency domain data, and the spatial data. In addition, the data are processed by eliminating the noise in the in-vehicle measured data used for detecting the in-vehicle living being. Then, the noise can be further accurately eliminated, and the detection precision of the in-vehicle living being can be improved. Furthermore, since unnecessary data are eliminated, the computation amount during the detection of the in-vehicle living being can be reduced, and the work efficiency can be improved.

According to the data processing method of the present invention, in the step of determining that no living being exists in the vehicle, it is determined based on an operation by a user that no living being exists in the vehicle.

According to the data processing method of the present invention, a feature part in the in-vehicle measured data is amplified through a filtering algorithm.

A data processing system according to the present invention processes data collected by a millimeter-wave radar, where the data processing method according to any one of aspects 1 to 7 is used.

### BRIEF DESCRIPTION OF THE DRAWINGS

Fig. 1 is a block diagram of a configuration example of a data processing system;
Fig. 2A is a block diagram of a configuration example of a millimeter-wave radar;
Fig. 2B is a schematic diagram of a distribution of range bins of millimeter-wave radar in a cabin of a vehicle;
Fig. 3 is a flowchart of process of in-vehicle living being detection;
Fig. 4 is a flowchart of generation of a noise map; and
Fig. 5 is a schematic diagram of process of eliminating noise in in-vehicle measured data based on a noise map.

### DESCRIPTION OF THE PREFERRED EMBODIMENTS

A data processing method and a data processing system of the present invention will be described below with reference to the accompanying drawings. In the embodiments described below, the same parts as those in the previous accompanying drawings are given the same reference numerals with their detailed description omitted, and different parts are mainly described.

The data processing system according to the present invention is composed of a plurality of functional modules, and may be installed as software in a device equipped with a central process unit (CPU) and a memory, such as an independent computer, or may be distributed in a plurality of devices. The data processing system is implemented by enabling, by a processor, the functional modules of the system stored in the memory. A circuit that implements the data processing system may transmit and receive data or collect data through the Internet and other networks.

In addition, in the following description, the application of the data processing method and the data processing system to in-vehicle living being detection is used as an example. However, the application scopes of the data processing method and the data processing system of the present invention are not limited thereto. For example, they may alternatively be used to detect a living being in other transport means other than the vehicle. Furthermore, in the description of the present invention, the term "living being" should not be construed narrowly as referring only to humans, but also includes various forms of living beings such as pets.

### (Data processing system 1)

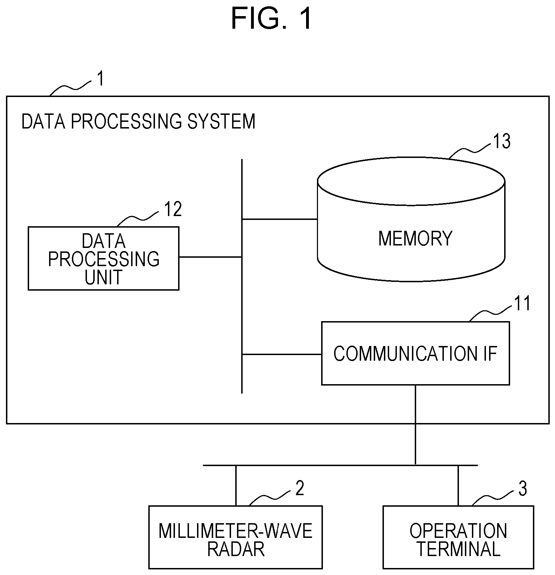

A data processing system 1 will be described below with reference to Fig. 1. Fig. 1 is a block diagram of a configuration example of the data processing system 1.

As shown in Fig. 1, the data processing system 1 includes a communication IF 11, a data processing unit 12, and a memory 13.

The communication IF 11 is an interface configured for communication of various types of data or information. The data processing system 1 is communicatively connected to a millimeter-wave radar 2 and an operation terminal 3 outside the data processing system 1, through, for example, the communication IF 11. Communication of various types of data or information is further implemented among components included in the data processing system 1 through the communication IF 11.

The data processing unit 12 is a functional unit configured to process received data. The data processing unit 12 processes the data collected by the millimeter-wave radar 2 using a data processing method described later.

The memory 13 is an apparatus for storing various types of data or information. The memory 13 may be a storage medium (for example, a magnetic storage medium, an electromagnetic storage medium, an optical storage medium, or a semiconductor memory) that may be read by a processor, and may alternatively be a driving apparatus that reads and writes data or information from and to the storage medium. The memory 13 stores, for example, a computer program required by the data processing unit 12 for implementing the data processing method described later.

In addition, the foregoing description is made with the data processing system 1, the millimeter-wave radar 2, and the operation terminal 3 being independent components as examples, but the configuration is not limited thereto. For example, the data processing system 1 may also be installed in the millimeter-wave radar 2 or the operation terminal 3 as long as the data processing system 1 may process the data collected by the millimeter-wave radar 2 using the data processing method described later.

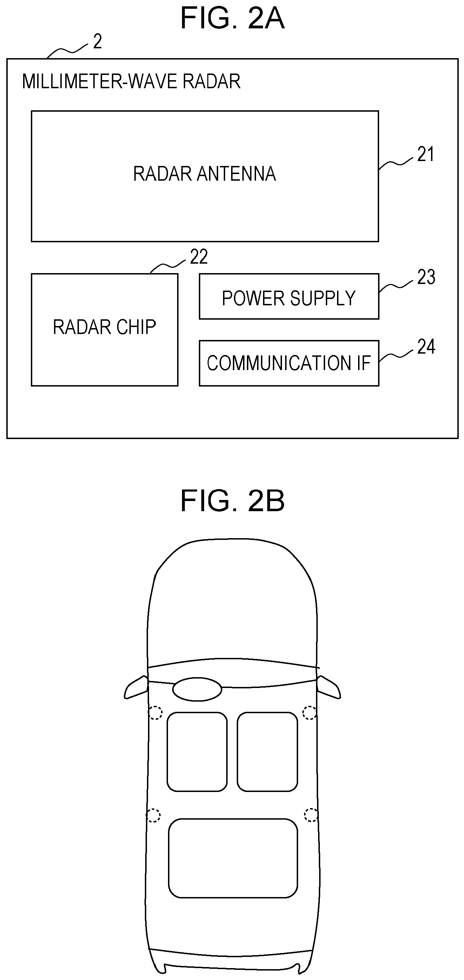

The millimeter-wave radar 2 will be described with reference to Figs. 2A and 2B. Fig. 2A is a block diagram of a configuration example of the millimeter-wave radar 2. Fig. 2B is a schematic diagram of a distribution of range bins of millimeter-wave radar in a cabin of a vehicle.

The millimeter-wave radar 2 is a radar apparatus that detects information such as existence, position, and time of an in-vehicle living being by transmitting millimeter-wave radar signals and analyzing the collected data (radar signals). As shown in Fig. 2A, the millimeter-wave radar 2 includes a radar antenna 21, a radar chip (application specific integrated circuit (ASIC)) 22, a power supply 23, and a communication IF 24.

As shown in Fig. 2B, the range bins of the millimeter-wave radar 2 are arranged, for example, around the cabin (for example, dotted circles in Fig. 2B), which is attributed to the radar's effective detection range of typically less than 2 meters and the existence of plenty of obstacles in the cabin. In addition, the arrangement positions and the number of the range bins of the millimeter-wave radar 2 are not limited thereof, but may be other arrangement positions and numbers.

The operation terminal 3 is a terminal for a user (for example, a driver) to operate. The operation terminal 3 may alternatively function as a client side of the data processing system 1. The operation terminal 3 can be a smartphone, a tablet computer terminal, an in-vehicle terminal, a wearable terminal, a mobile terminal, or a handheld terminal. In addition, the operation terminal 3 has an input interface for receiving various operations from the user. The operation terminal 3 may alternatively have a display apparatus for displaying various types of data or information. The display apparatus may alternatively be a touch-panel display apparatus with a function of an input interface.

Specifically, the operation terminal 3 receives a determination result that no living being exists in the vehicle from the user, and transmits such result from the user to the data processing system 1. When it is necessary to collect in-vehicle environmental data described later, the operation terminal 3 may, through a display apparatus, etc., prompt the user to determine that no living being exists in the vehicle. The operation terminal 3 periodically prompts the user to collect the in-vehicle environmental data based on, for example, a preset time interval. In addition, when the millimeter-wave radar 2 detects the existence of the in-vehicle living being, the operation terminal 3 may give an alarm on the existence of the in-vehicle living being to the user or other terminals through the display apparatus, etc.

### (Process of in-vehicle living being detection)

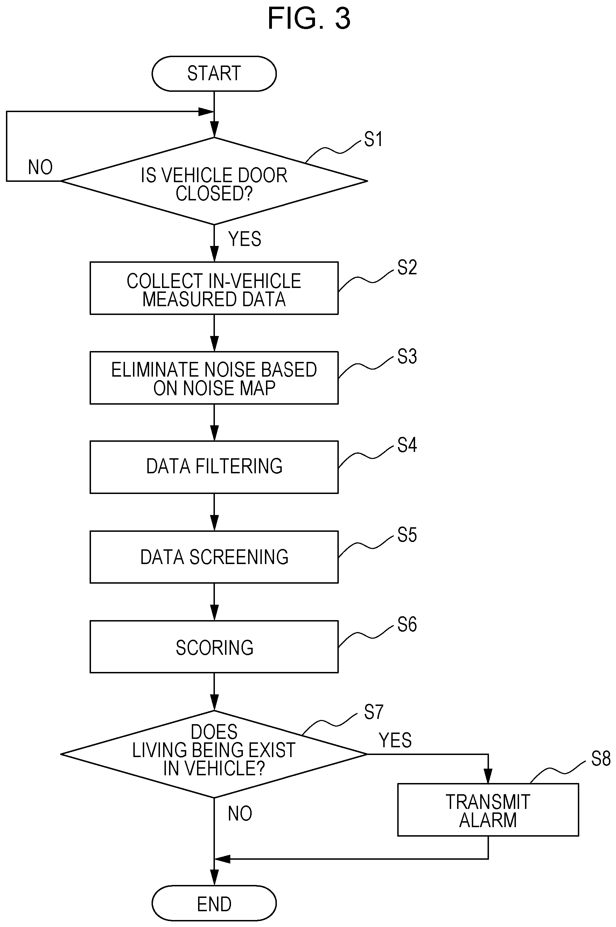

A process of in-vehicle living being detection will be described with reference to Fig. 3. Fig. 3 is a flowchart of the process of in-vehicle living being detection.

In step S1, the data processing system 1 determines whether a vehicle door is closed. If it is determined that the vehicle door is closed ("Yes" in step S1), the process proceeds to step S2. If it is determined that the vehicle door is not closed ("No" in step S1), the determination in step S1 continues. In addition, in step S1, the data processing system may determine whether the vehicle door is closed and locked instead of determining whether the vehicle door is closed. The process would proceed to step S2 only when the vehicle door is closed and locked; otherwise, the determination in step S1 would be continued.

In step S2, the millimeter-wave radar 2 collects the in-vehicle measured data. Herein, the term "in-vehicle measured data" refers to data collected by the millimeter-wave radar 2 for detecting whether a living being exists in the vehicle after the driver leaves the vehicle and closes the vehicle door each time, for example. Next, the process proceeds to step S3.

In step S3, the data processing system 1 processes, based on a noise map, the in-vehicle measured data collected by the millimeter-wave radar 2 in step S2, so as to eliminate the noise in the in-vehicle measured data. Herein, the noise map used by the data processing system 1 is generated by a flow of generation of the noise map described later. The flow of generation of the noise map and a method for eliminating the noise in the in-vehicle measured data based on the noise map will be described in detail later. Next, the process proceeds to step S4.

In step S4, the millimeter-wave radar 2 performs data filtering on the in-vehicle measured data after the noise is eliminated by the data processing system 1 in step S3. Next, the process proceeds to step S5.

In step S5, the millimeter-wave radar 2 screens data from the living being in the in-vehicle measured data subjected to the data filtering in step S4. Next, the process proceeds to step S6.

In step S6, the millimeter-wave radar 2 scores the data from the living being screened in step S5, and detects whether a living being exists in the vehicle according to a score. Next, the process proceeds to step S7.

In step S7, when the millimeter-wave radar 2 detects that the living being exists in the vehicle ("Yes" in step S7), the process proceeds to step S8. When no living being is detected in the vehicle ("No" in step S7), the process ends.

In step S8, the millimeter-wave radar 2 transmits an alarm on the existence of the in-vehicle living being to the user or other terminals through, for example, the display apparatus of the operation terminal 3, etc. Next, the process ends.

In the present invention, methods for "data filtering", "screening data from the living being", "scoring", etc. involved in the above description are not limited, and may be completed by any known method.

For example, in step S4, the data filtering may be completed by amplifying a feature part in the in-vehicle measured data through a filtering algorithm.

When step S6 is performed, the data from the living being screened in step S5 are scored as exist_score (0 to 1.0), and a threshold thresh_normal (for example, 0.6) is preset. When the score exist_score is greater than the threshold thresh_normal, it is determined that the living being exists in the vehicle. When the score exist _score is less than or equal to the threshold thresh_normal, it is determined that no living being exists in the vehicle. In an ideal state, when the driver exists in the vehicle, the score exist_score usually reaches 0.8. In contrast, in some special scenarios or time with strong noise, the score exist _score is reduced to 0.7 or even lower.

### (Flow of generation of the noise map)

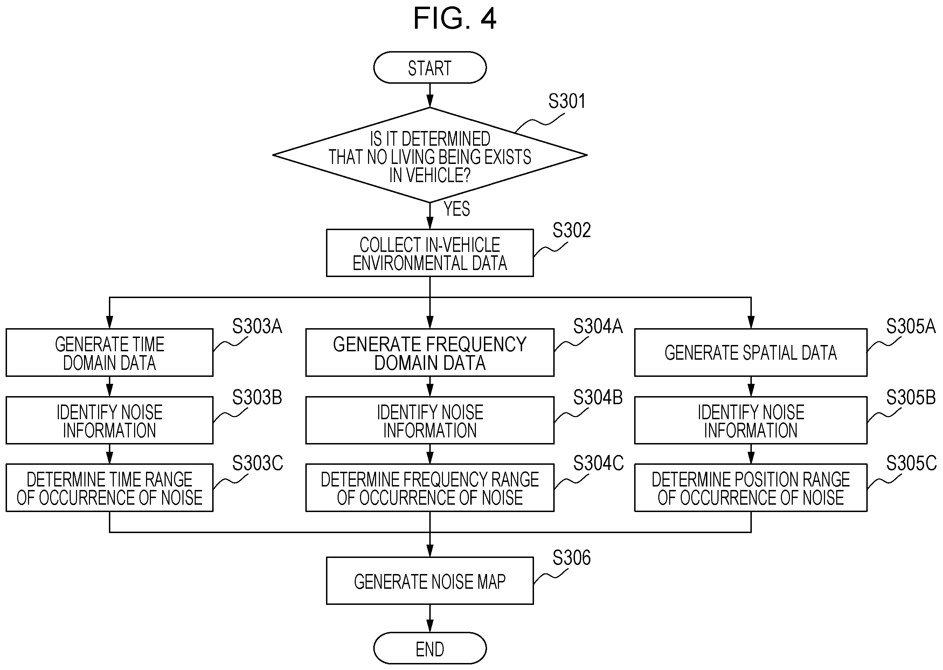

A flow of generation of the noise map will be described below with reference to Fig. 4. Fig. 4 is a flowchart of generation of the noise map. In step S3 shown in Fig. 3, the data processing system 1 eliminates the noise in the in-vehicle measured data based on the noise map generated through the flow (step S301 to step S306) of noise map generation shown in Fig. 4.

In the present invention, the term "in-vehicle environmental data" refers to data indicating the in-vehicle environment collected by the millimeter-wave radar 2 when it is determined that no living being exists in the vehicle based on the operation, by the user, on the operation terminal 3. It can be considered that the "in-vehicle environmental data" reflect a set of in-vehicle noise data.

The data processing system 1 periodically prompts the user through, for example, the operation terminal 3, to determine whether it is necessary to generate the noise map, and collects the in-vehicle environmental data when the user selects "Yes". The period for periodically prompting the user to determine whether it is necessary to generate the noise map through the operation terminal 3 may be, for example, one month. In addition, the data processing system 1 may also generate a new noise map when an interval since the generation of the last noise map exceeds a preset time interval.

In step S301, the data processing system 1 determines whether the user has determined that no living being exists in the vehicle. Herein, the data processing system 1 prompts, through, for example, the operation terminal 3, the user to determine that no living being exists in the vehicle. When it is determined that no living being exists in the vehicle based on the operation on the operation terminal 3 by the user, the flow proceeds to step S302.

In step S302, the millimeter-wave radar 2 collects the in-vehicle environmental data. In this case, since the user determines that no living being exists in the vehicle in step S301, the in-vehicle environmental data collected by the millimeter-wave radar 2 exclude information from the living being and include information from noise in the in-vehicle environment. In addition, the in-vehicle environmental data collected by the millimeter-wave radar 2 include at least one of time domain data, frequency domain data, and spatial data. Next, the flow proceeds to step S303A, step S304A, and step S305A.

In step S303A, the data processing system 1 generates the time domain data in the in-vehicle environmental data collected by the millimeter-wave radar 2. Herein, the generated time domain data include data indicating a time change of the in-vehicle environmental data. In addition, the data processing system 1 generates the time domain data by, for example, an analog-to-digital conversion or signal queuing method. Next, the flow proceeds to step S303B.

In step S303B, the data processing system 1 identifies noise information from the time domain data generated in step S303A. Herein, a method for "identifying the noise" is not limited, and any known method can be used. In addition, the "noise information" in the present invention includes, for example, information indicating the time, type, source, position, etc., of the noise. Next, the flow proceeds to step S303C.

In step S303C, the data processing system 1 determines a time range of occurrence of the noise according to the noise information identified in step S303B.

Specifically, when the noise information is identified from the time domain data, the noise information is, for example, information indicating a change of noise in the time domain.

For example, when the vehicle door is closed, the vehicle produces a significant shaking noise within a short time. In this case, the time domain data of the collected in-vehicle environmental data feature a great waveform amplitude, and the greater the amplitude is, the higher a probability that such noise exists is. By identifying a waveform with a great amplitude within the short time, information in the time domain of the noise caused by door closing can be identified from the time domain data. In this case, according to the change of the time domain data, the time range of occurrence of the noise can be determined. For example, it may be determined that an interval with a great waveform amplitude is the time range of occurrence of the noise. In addition, permanent noise and temporary noise may also be distinguished from the time domain data of the in-vehicle environmental data. This is because the temporary noise causes a great change of the waveform of the time domain data within the short time. Next, the flow proceeds to step S306.

In step S304A, the data processing system 1 generates the frequency domain data in the in-vehicle environmental data collected by the millimeter-wave radar 2. Herein, the generated frequency domain data include data indicating a frequency change of the in-vehicle environmental data. In addition, the data processing system 1 generates the frequency domain data by, for example, a filtering or integration method. Next, the flow proceeds to step S304B.

In step S304B, the data processing system 1 identifies the noise information from the frequency domain data generated in step S304A. Next, the flow proceeds to step S304C.

In step S304C, the data processing system 1 determines a frequency range of occurrence of the noise according to the noise information identified in step S304B.

Specifically, when the noise information is identified from the frequency domain data, the noise information is, for example, information indicating a change of noise in the frequency domain.

For example, when a liquid (such as mineral water) is placed in the vehicle, the liquid continuously produces noise with a specific frequency similar to a frequency of biological respiration. In this case, the frequency domain data of the collected in-vehicle environmental data feature generating a high signal-to-noise ratio (SNR) at the specific frequency, and the higher the SNR is, the higher a probability that such noise exists is. By identifying the specific frequency at which the high SNR is produced, information in the frequency domain of the noise caused by the liquid placed in the vehicle may be identified from the frequency domain data. In addition, for example, when a decorative piece is suspended inside the vehicle, swing of the decorative piece also produces noise with a specific frequency. In this case, according to the change of the frequency domain data, the frequency range of occurrence of fixedly vibrating noise can be determined. For example, it may be determined that specific frequencies or an interval of specific frequencies at which the high SNR may be produced is the frequency range of occurrence of the noise. Next, the flow proceeds to step S306.

In step S305A, the data processing system 1 generates the spatial data in the in-vehicle environmental data collected by the millimeter-wave radar 2. Herein, the generated spatial data include data indicating a spatial change of the in-vehicle environmental data. In addition, the data processing system 1 computes a spatial distance as the spatial data through, for example, a timer and a signal strength matrix offset. Next, the flow proceeds to step S305B.

In step S305B, the data processing system 1 identifies the noise information from the spatial data generated in step S305A. Next, the flow proceeds to step S305C.

In step S305C, the data processing system 1 determines a position range of occurrence of the noise according to the noise information identified in step S305B.

Specifically, when the noise information is identified from the spatial data, the noise information is, for example, information indicating a change of the signal strength of the noise in space.

For example, a structure of the vehicle and various objects placed cause a multipath effect. In a specific spatial position, there is a possibility that a signal intensity of a radar signal reflected by the vehicle structure or the objects reaches that of a radar signal reflected by the living being. In addition, besides the reflection of the vehicle structure and the objects, diffraction or refraction may also cause local high signal intensity. These local high signal intensities may reach the signal intensity of the radar signal reflected by the living being. In this case, the spatial data of the collected in-vehicle environmental data feature generating local high signal intensity (amplitude), and the higher the signal intensity is, the higher a possibility that such noise exists is. By identifying the local high signal intensity generated, information in space of the noise caused by the vehicle structure and the various objects placed may be identified from the spatial data. Next, the flow proceeds to step S306.

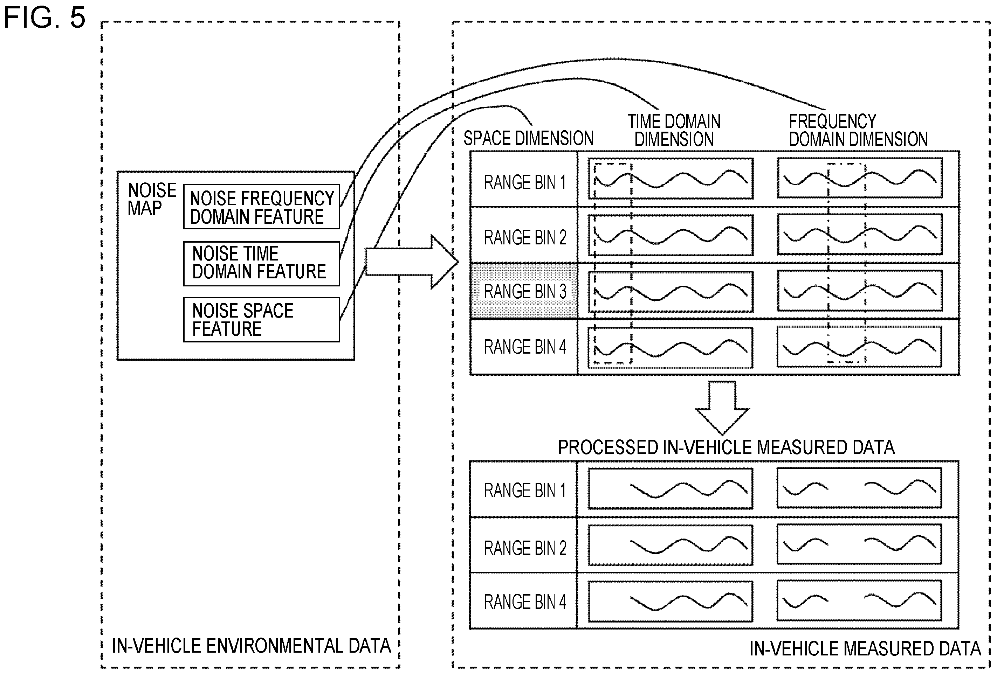

The elimination of the noise in the in-vehicle measured data based on the noise map will be described with reference to Fig. 5. Fig. 5 is a schematic diagram of eliminating noise in in-vehicle measured data based on the noise map.

In step S306, the data processing system 1 generates the noise map based on the in-vehicle environmental data collected by the millimeter-wave radar 2 when the user determines that no living being exists in the vehicle. Specifically, the noise map is generated based on the time domain data, the frequency domain data, and the spatial data in the in-vehicle environmental data. Herein, the "noise map" may be considered as a database including the noise information. In the noise map, the noise information and the noise reduction method used to eliminate the noise are stored in a corresponding manner. In addition, as shown in Fig. 5, since the noise map is generated based on the time domain data, the frequency domain data, and the spatial data in the in-vehicle environmental data, the noise information in the noise map may be divided into a noise time domain feature, a noise frequency domain feature, and a noise space feature. The noise time domain feature includes the noise identified from the time domain data and the time range of the noise; noise frequency domain feature includes the noise identified from the frequency domain data and the frequency range of the noise; and the noise space feature includes the noise identified from the spatial data and the position range of the noise. Next, the flow ends.

Thus, the data processing system 1 generates the noise map based on the in-vehicle environmental data collected when the user determines that no living being exists in the vehicle. In addition, in step S3 of the flow of in-vehicle living being detection, the data processing system 1 eliminates the noise in the in-vehicle measured data based on the generated noise map.

Specifically, the data processing system 1 divides the in-vehicle measured data into three dimensions of the time domain, frequency domain, and space when eliminating the noise in the in-vehicle measured data. For example, as shown in Fig. 5, the data processing system 1 divides the in-vehicle measured data into range bin 1, range bin 2, range bin 3, and range bin 4 according to the range bin in the space dimension. In this case, the right diagram of Fig. 5 shows the time domain data and frequency domain data, respectively corresponding to the divided range bin 1 to range bin 4, in the in-vehicle measured data. In addition, a division method and a division result of the in-vehicle measured data are not limited thereto, and for example, the in-vehicle measured data may be divided into range bin 1 to range bin 8.

Next, the data processing system 1 eliminates the noise in the in-vehicle measured data based on the noise information (the noise time domain feature, the noise frequency domain feature, and the noise space feature) in the noise map and the noise reduction method established corresponding to the noise information.

For example, according to the noise time domain feature in the noise map, it is understood that the range shown by a dotted box in a time domain dimension is the time range of occurrence of the noise. In this case, according to the information indicating the time range of occurrence of the noise in the time domain data of the in-vehicle environmental data included in the noise map, the data processing system 1 eliminates the data within the time range in the in-vehicle measured data. Thus, the processed data in the time domain dimension of the in-vehicle measured data shown in Fig. 5 are obtained.

In addition, according to the noise frequency domain feature in the noise map, it is understood that the range shown by a single dotted box in the frequency domain dimension is the frequency range of occurrence of the noise. In this case, according to the information indicating the frequency range of occurrence of the noise in the frequency domain data of the in-vehicle environmental data included in the noise map, the data processing system 1 eliminates the data within the frequency range in the in-vehicle measured data. Thus, the processed data in the frequency domain dimension of the in-vehicle measured data shown in Fig. 5 are obtained.

In addition, according to the noise space feature in the noise map, it is understood that the range bin 3 shown by a gray box in the space dimension is the position range of occurrence of the noise. In this case, according to the information indicating the position range of occurrence of the noise in the spatial data of the in-vehicle environmental data included in the noise map, the data processing system 1 eliminates the data within the position range in the in-vehicle measured data. Thus, the processed data in the space dimension of the in-vehicle measured data shown in Fig. 5 are obtained.

Thus, the data processing system 1 eliminates the noise in the in-vehicle measured data based on the noise map. Next, the flow that the data processing system 1 eliminates the noise in the in-vehicle measured data by processing the in-vehicle measured data ends, followed by proceeding to step S4.

According to the data processing method and the data processing system of the present invention, the detection precision of the in-vehicle living being can be improved. In addition, the noise can be accurately eliminated, the computation amount during the detection of the in-vehicle living being can be reduced, and the work efficiency can be improved.

Specifically, when whether the living being exists in the vehicle is detected based on the in-vehicle measured data, data indicating at least one of the time range, the frequency range, and the position range of occurrence of the noise in the in-vehicle measured data are eliminated by the data processing system 1. Thus, the detection precision of the in-vehicle living being based on the in-vehicle measured data can be improved. In addition, since the noise data in the in-vehicle measured data are eliminated, the computation amount during the detection of the in-vehicle living being based on the in-vehicle measured data can be reduced, and the work efficiency can be improved.

In addition, the noise information and the noise reduction method are stored in a corresponding manner in the noise map generated based on the in-vehicle environmental data. Thus, the corresponding noise reduction methods can be used appropriately according to different noise conditions, and the noise reduction methods are highly targeted.

In addition, as mentioned above, in the cases of the vehicle door closing, the liquid placed in the vehicle, the decorative piece suspended inside the vehicle, etc., an existing method for in-vehicle living being detection results in that a score of a detection result approaches a preset threshold. However, in the present invention, the noise data in the in-vehicle measured data are eliminated based on the noise map, such that the detection precision of the in-vehicle living being can be improved.

In addition, the data processing method of the present invention is performed when it is determined that the vehicle door is closed, such that computation idle resources of a millimeter-wave radar 2 can be fully utilized. The existing method for in-vehicle living being detection requires a heavy-load algorithm such as fast Fourier transform (FFT), and the computation resources of the millimeter-wave radar 2 are almost saturated. However, by the data processing method of the present invention, the noise data in the in-vehicle measured data are eliminated based on the noise map, such that the computation resources can be optimized, the processing time can be shortened, and the work efficiency can be improved.

In addition, by the existing data processing method, every time the in-vehicle living being is detected, the noise in the in-vehicle measured data is eliminated by using preset ex-factory in-vehicle environmental data. However, as mentioned above, the in-vehicle environment changes due to the cases of the vehicle door closing, the liquid placed in the vehicle, and the decorative piece suspended inside the vehicle. Consequently, the noise is impossible to eliminate accurately by using the ex-factory in-vehicle environmental data, and thus detection precision will be reduced. On the contrary, according to the data processing method of the present invention, the noise map is generated by collecting the in-vehicle environmental data when it is determined that no living being exists in the vehicle, and the noise in the in-vehicle measured data is eliminated based on the noise map. Thus, the noise can be accurately eliminated.

The embodiments described above are merely illustrative, and are not intended to limit the present invention. For the embodiments described above, those skilled in the art can appropriately add and delete a constitutional element, and change the design of the components, and as long as such modifications comply with the technical idea of the present invention, they shall fall within the scope of the present invention.

For example, the generated noise map may also be uploaded to a cloud server, and a learning model deployed in the cloud server may learn the noise map. Then, the learning model distributes the learned noise map to vehicles or terminals.

## Claims

1. A data processing method for processing data collected by a millimeter-wave radar (2), the data processing method comprising:
a step of collecting in-vehicle measured data; and
a step of eliminating noise in the in-vehicle measured data based on a noise map, wherein
the noise map is generated based on in-vehicle environmental data collected when it is determined that no living being exists in a vehicle.

2. The data processing method according to claim 1, wherein
the in-vehicle environmental data comprise at least one of time domain data, frequency domain data, and spatial data.

3. The data processing method according to claim 2, wherein
in the step of eliminating noise in the in-vehicle measured data,
based on the noise map, noise information in the in-vehicle measured data is identified according to the time domain data, the frequency domain data, and the spatial data, and
the noise is eliminated by using a noise reduction method corresponding to the noise information.

4. The data processing method according to claim 3, wherein
in the step of eliminating noise in the in-vehicle measured data,
according to information indicating a time range of occurrence of the noise in the time domain data, data within the time range in the in-vehicle measured data are eliminated.

5. The data processing method according to claim 3, wherein
in the step of eliminating noise in the in-vehicle measured data,
according to information indicating a frequency range of the noise in the frequency domain data, data within the frequency range in the in-vehicle measured data are eliminated.

6. The data processing method according to claim 3, wherein
in the step of eliminating noise in the in-vehicle measured data,
according to information indicating a position range of occurrence of the noise in the spatial data, data within the position range in the in-vehicle measured data are eliminated.

7. The data processing method according to claim 1, wherein
in the step of determining that no living being exists in the vehicle,
it is determined based on an operation by a user that no living being exists in the vehicle.

8. The method for processing data according to any one of claims 1 to 7, wherein
a feature part in the in-vehicle measured data is amplified through a filtering algorithm.

9. A data processing system (1) for processing data collected by a millimeter-wave radar (2), wherein
the data processing method according to any one of claims 1 to 7 is used.
